Europäisches Patentamt

European Patent Office

Office européen des brevets

(19)

(11) Numéro de publication: **0 219 412**
**B1**

(12) # FASCICULE DE BREVET EUROPÉEN

(45) Date de publication du fascicule du brevet:
27.12.89

(51) Int. Cl.⁴: **G 21 C 7/10,** F 16 B 21/02

(21) Numéro de dépôt: **86402156.3**

(22) Date de dépôt: **01.10.86**

(54) **Dispositif de verrouillage d'une bague de guidage sur une plaque comportant une ouverture et son application à un tube guide de réacteur nucléaire.**

(30) Priorité: **01.10.85 FR 8514542**

(43) Date de publication de la demande:
**22.04.87 Bulletin 87/17**

(45) Mention de la délivrance du brevet:
**27.12.89 Bulletin 89/52**

(84) Etats contractants désignés:
**BE CH DE ES LI SE**

(56) Documents cité:
**EP-A-0 133 173**
**DE-A-2 049 870**
**FR-A-1 308 899**
**GB-A-2 108 408**
**US-A-3 827 110**

(73) Titulaire: **FRAMATOME, Tour Fiat 1, Place de la Coupole, F-92400 Courbevoie (FR)**

(72) Inventeur: **Cauquelin, Claude, 3, rue Appollinaire Saint- Germain de la Grange, F-78640 Neauphle-Le- Chateau (FR)**
Inventeur: **Poitrenaud, Pierre, 27, avenue du Plateau, F-78190 Elancourt (FR)**

(74) Mandataire: **Moncheny, Michel, c/o Cabinet Lavoix 2 Place d'Estienne d'Orves, F-75441 Paris Cedex 09 (FR)**

EP 0 219 412 B1

LIBER, STOCKHOLM 1989

## Description

La présente invention concerne un dispositif de verrouillage et de centrage permettant la mise en place et l'extraction rapides d'une bague amovible applicable plus particulièrement aux tubes de guidage des réacteurs nucléaires.

Dans les réacteurs nucléaires comportant des barres de commande de puissance et d'arrêt il est connu d'assurer à l'aide de tubes guides, non seulement le guidage des barres, en forme de grappe, en elles-mêmes, mais aussi le guidage de l'arbre reliant la grappe au mécanisme de commande de translation des barres. Cet arbre, appelé prolongateur, est centré et guidé dans un tube disposé dans l'espace compris entre les tubes guides de grappe et la paroi de l'enceinte portant les mécanismes.

A la partie terminale du tube est disposée, de manière connue, une bague assurant d'une part le guidage du prolongateur et d'autre part agissant comme limiteur de débit afin d'obliger le réfrigérant, ayant traversé le coeur et ayant pénétré dans les tubes guides, à s'écouler par les ouvertures prévues à cet effet dans les tubes guides de grappes.

De plus, lors des opérations de déchargement et de rechargement du coeur cette bague permet un guidage latéral du prolongateur de façon à ce que lors de la descente du couvercle de la cuve, ce prolongateur puisse pénétrer dans les pénétrations prévues dans le couvercle.

Enfin, cette bague doit être démontable afin de permettre les opérations de maintenance classique des composants des coeurs de réacteur nucléaire.

Dans ce but, cette bague est maintenue à l'aide d'éléments flexibles sur la plaque d'extrémité du tube. Ces éléments flexibles sont solidaires de la plaque d'extrémité et sont répartis circonférentiellement autour de l'ouverture pratiquée au centre de ladite plaque. La partie extrême, opposée à celle liée à la plaque, des éléments flexibles comporte une surépaisseur destinée à prendre appui sur le rebord périphérique de la bague, lorsque celle-ci est disposée dans l'ouverture, assurant ainsi son maintien.

De ce fait une tension mécanique constante est engendrée dans les éléments flexibles. Ceci favorise, compte tenu de l'ambiance régnant dans le coeur du réacteur lors de son fonctionnement, le développement de corrosion sous contrainte et les risques de fissuration des éléments flexibles. Ces risques de fissuration sont d'autant plus nocifs qu'ils peuvent occasionner des ruptures des éléments flexibles. Ces ruptures ont pour conséquences immédiates la perte du maintien des bagues et la création d'objets migrants dans le circuit primaire du réacteur nucléaire.

Dans une réalisation connue par la demande de brevet européen EP-A1-0 133 173 la fixation auto-encliquetable de la bague de guidage dans l'ouverture de la plaque terminale s'effectue à l'aide d'éléments d'accrochage effaçables portés par la bague et maintenus en position de blocage à l'aide de dispositifs à ressort.

Bien que ces systèmes démontables soient d'une mise en place pratique et d'un fonctionnement à sécurité positive, il n'en demeure pas moins vrai qu'ils peuvent présenter, à la suite de phénomènes de corrosion sous contrainte, des risques de rupture entraînant la création de corps migrants.

De plus, ces systèmes nécessitent pour leur montage et leur démontage des outillages relativement complexes compte tenu que ces opérations s'effectuent sous une hauteur d'eau importante nécessaire à la protection des opérateurs.

On connaît également par le GB-A-2 108 408 un embout à connection rapide constituant une tuyère de pulvérisation qui peut être fixé sur une buse présentant des logements sur sa périphérie interne séparés par des passages ouverts vers une extrémité axiale de la buse. L'embout présente des parties d'accrochage complémentaires des logements de la buse sur sa périphérie externe. Un tel dispositif n'est cependant pas prévu pour réaliser un centrage parfait d'une bague par rapport à une ouverture traversant une plaque.

Le but de la présente invention est de proposer un dispositif de verrouillage et de centrage d'une bague de guidage sur une plaque d'extrémité d'un tube-guide d'une barre de commande d'un réacteur nucléaire, ladite plaque d'extrémité comportant une ouverture au niveau de laquelle la bague de guidage qui comporte une ouverture centrale et coaxiale est montée de manière coaxiale à l'ouverture, le dispositif de verrouillage et de centrage étant constitué par une pièce intermédiaire de forme tubulaire comportant des logements de direction radiale disposés sur sa périphérie interne et séparés par des parties d'accrochage de la bague complémentaires des logements de la pièce intermédiaire, disposés sur sa périphérie externe, de manière à permettre le montage et le démontage de la bague de guidage avec un outillage simplifié tout en assurant un centrage parfait de la bague de guidage par rapport à l'ouverture de la plaque d'extrémité du tube-guide.

Dans ce but, la pièce intermédiaire est fixée rigidement sur la plaque d'extrémité de façon que son ouverture centrale soit coaxiale à l'ouverture de la plaque.

L'invention concerne de même une bague de guidage comportant un ensemble d'ergots espacés entre eux et répartis sur sa périphérie définissant ainsi des organes aptes à s'introduire dans les ouverture de la pièce rigidement fixée à ladite plaque et aptes à assurer le verrouillage de la bague après avoir effectué une rotation d'un angle donné de celle-ci par blocage desdits ergots dans lesdits logements de ladite pièce.

L'invention concerne enfin les moyens de positionnement précis et de blocage de la bague sur la pièce intermédiaire.

Dans un mode préférentiel de l'invention, la plaque est une plaque terminale d'un tube de guidage de prolongateur de barre de commande d'un réacteur nucléaire à eau légère, la pièce intermédiaire est centrée et fixée sur la plaque terminale, à demeure, lors d'une opération de maintenance et ladite bague de guidage assure le guidage du prolongateur et les restrictions de débit de l'eau légère dans le tube de guidage, cette bague de guidage pouvant être séparée de la pièce intermédiaire par simple rotation, lors d'une opération ultérieure de maintenance.

Afin de bien comprendre l'invention on va maintenant décrire, à titre d'exemple non limitatif, en se référant aux figures jointes en annexe, plusieurs modes de réalisation du dispositif de verrouillage d'une bague de guidage amovible pour tube guide d'un réacteur nucléaire à eau sous pression.

La figure 1 représente en coupe une vue partielle de la cuve et des équipements internes d'un réacteur nucléaire.

La figure 2 représente un ensemble de guidage d'une barre de contrôle et de son prolongateur.

La figure 3 représente en coupe les composants principaux d'un dispositif suivant un premier mode de mise en oeuvre de l'invention.

La figure 4 représente en vue de dessus les composants de la figure 3.

La figure 5 montre en coupe les composants selon un second mode de mise en oeuvre.

La figure 6 montre en coupe les composants selon un troisième mode de mise en oeuvre.

La figure 7 montre en coupe les composants selon un quatrième mode de mise en oeuvre.

La figure 8 est une vue en coupe d'une première variante de blocage de la bague de guidage dans les logements de la pièce intermédiaire.

La figure 9 est une vue en coupe d'une seconde variante de blocage de la bague de guidage dans les logements de la pièce intermédiaire.

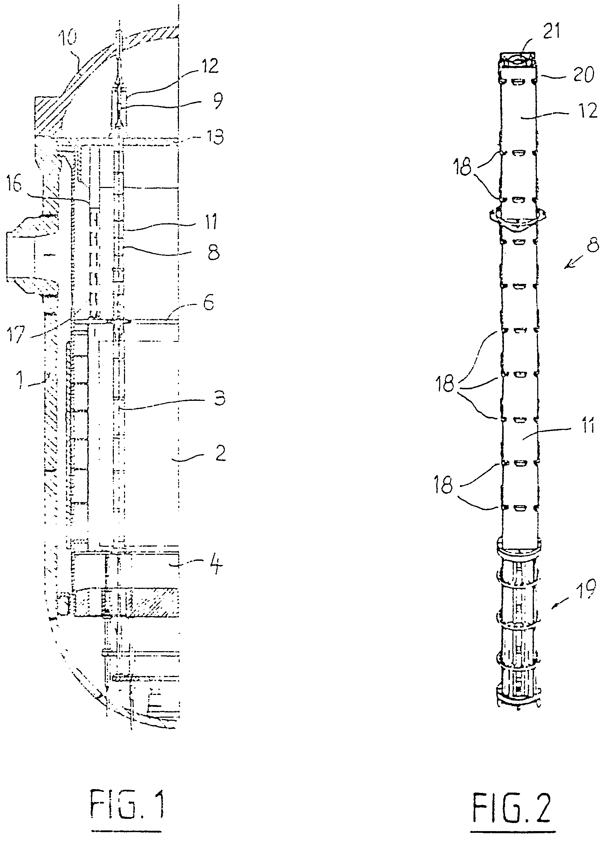

Sur la figure 1, on voit la cuve d'un réacteur nucléaire à eau sous pression à l'intérieur de laquelle est disposée le coeur 2 du réacteur constitué par un ensemble d'assemblages 3 disposés verticalement et reposant sur une plaque inférieure de coeur 4 par l'intermédiaire de leur embout inférieur.

Au-dessus du coeur 2 est disposée une plaque supérieure de coeur 6 percée d'ouvertures au niveau de chacun des assemblages et sur laquelle reposent des tubes de guidage 8 placés à la verticale de certains des assemblages de coeur.

Au-dessus du couvercle hémisphérique 10 de la cuve sont placés des mécanismes de déplacement, non représentés, des barres de commande en forme de grappe qui sont reliées à l'extrémité inférieure de tiges de commande 9, sur lesquelles s'exerce l'action des mécanismes.

Les barres de commande peuvent se déplacer à l'intérieur des assemblages 3, à l'intérieur de tubes remplaçant dans le réseau de ces assemblages certains crayons combustibles, de manière à assurer le contrôle de la réactivité du coeur 2.

Les tubes de guidage 8, comme on peut le voir plus en détail sur la figure 2 se composent d'une partie basse 11, appelée ci-après tube guide, reposant sur une plaque support 13 et guidé dans la plaque supérieure de coeur 6 et d'une partie haute 12, appelée ci-après tube, reliée à la plaque support 13 parallèle à la plaque 6.

Les plaques 6 et 13 sont reliées entre elles par des entretoises 16 tubulaires et percées d'ouvertures 17 pour la circulation du fluide de refroidissement constitué par l'eau légère sous pression remplissant la cuve. Grâce à ces entretoises 16, les équipements internes supérieurs forment un ensemble rigide solidaire de la plaque support 13.

A l'intérieur de chacun des tubes de guidage 8 et sur toute leur partie supérieure, sont placés des dispositifs de guidage discontinus constitués par des plaques perforées 18 régulièrement espacées suivant la longueur du tube guide 11 et en partie basse du tube 12.

La partie inférieure 19 du tube guide 11 constitue un dispositif de guidage continu des barres de commande dont les perforations sont dans le prolongement des perforations des dispositifs discontinus 18.

La partie 19 du tube guide est constituée par des fourreaux occupant toute la hauteur de la zone 19 et comportant des canaux verticaux de guidage de la barre de commande.

Cette zone 19 sans enveloppe tubulaire permet ainsi à la majeure partie du fluide de refroidissement ayant traversé les assemblages combustibles 3 adjacents de se mélanger à la partie du fluide de refroidissement circulant par les ouvertures 17 afin d'être dirigé vers un générateur de vapeur non représenté.

Dans le cas où la zone 19 comporte une enveloppe tubulaire, il est évident que des ouvertures latérales seront pratiquées à ce niveau afin de permettre l'évacuation du fluide de refroidissement.

Les barres de commande sont constituées par une grappe de crayons absorbants reliés à leur partie supérieure par un croisillon ou araignée lui-même relié à la partie inférieure des tiges de commande ou prolongateur 9.

A la partie supérieure du tube 12 est disposée une plaque 20 comportant une bague 21. Cette bague 21, comme expliqué ci-dessus, doit être démontable afin de permettre, lors des opérations de maintenance des équipements, le passage de la partie terminale du prolongateur 9 qui présente une section plus importante au niveau de sa liaison avec l'araignée des grappes.

Toutefois, en fonctionnement cette bague 21 doit assurer le guidage de la partie filante du prolongateur 9 afin d'empêcher que ce dernier ne soit soumis à des déplacements latéraux importants qui risqueraient d'entraîner des mauvaises introductions des grappes de commande.

La bague 21 doit de plus assurer un rôle de restricteur de débit afin d'empêcher que la partie du réfrigérant présent dans le tube de guidage 8 ne s'échappe dans l'espace compris entre la plaque supérieure 13 et le couvercle de cuve 10.

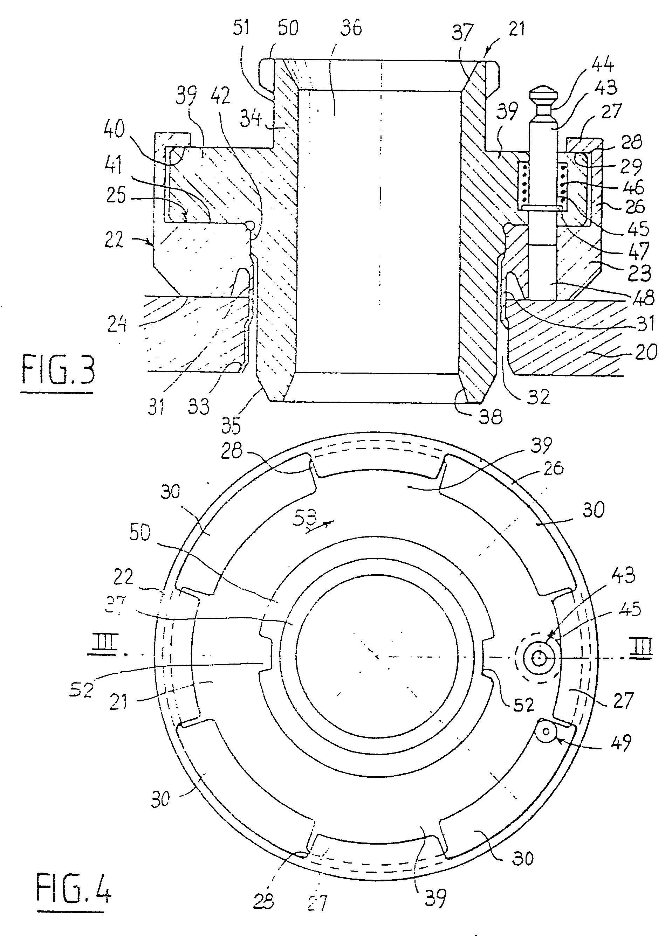

Comme on peut le voir sur les figures 3 et 4, et selon une réalisation préférentielle de l'invention, une pièce intermédiaire 22 de forme cylindrique comporte une couronne épaisse 23 dont les faces 24 et 25 définissent des surfaces d'appui. A la partie supérieure et en périphérie extérieure, la couronne 23 est prolongée par une virole 26 pourvue à son extrémité d'une série d'épaulements 27 parallèles à la surface d'appui 25.

Les épaulements 27 forment ainsi des logements 28 répartis sur la périphérie de la pièce intermédiaire 22 et définis par les surfaces 25 de la couronne 23, la surface 29 de l'épaulement 27 et la surface interne de la virole 26.

Entre les épaulements 27, la virole 26 est à bords francs déterminant ainsi des ouvertures 30.

A sa partie inférieure et à sa périphérie interne la couronne 23 est prolongée par une virole cylindrique 31 qui peut être continue ou sectorisée.

Cette virole 31 peut soit, comme il est représenté sur la partie droite de la figure 3, être d'une longueur égale ou sensiblement supérieure à la moitié de l'épaisseur de la plaque 20, soit, comme on le voit sur la partie gauche de la figure 3, être d'une longueur égale ou supérieure à l'épaisseur de la plaque 20.

La virole 31 permet le centrage de la pièce intermédiaire 22 dans l'ouverture 32 pratiquée au centre de la plaque 20.

Comme on peut le voir sur la figure 3 l'ouverture 32 est constituée par un alésage à diamètres différenciés séparés par des chanfreins 33.

Dans le mode de réalisation décrit la pièce intermédiaire 22 est ainsi centrée puis fixée dans l'ouverture 32 par liaison métallurgique qui peut être, à titre d'exemple, un outil de roulage mécanique. La virole 31, ainsi déformée, est maintenue rigidement par repoussage de sa paroi externe sur la paroi interne de l'ouverture 32 et sur les chanfreins 33.

La pièce intermédiaire 22 constitue ainsi un siège de réception de la bague amovible 21.

Comme on le voit sur les figures 3 et 4 la bague 21 se compose d'un corps cylindrique 34 comportant à sa partie inférieure un chanfrein 35 de guidage pour sa mise en place.

L'ouverture centrale 36 de la bague 21 est d'un diamètre légèrement supérieur au diamètre extérieur de la partie filante du prolongateur 9 visible sur la figure 1.

Cette ouverture 36 comporte à ses extrémités deux chanfreins de guidage 37 et 38.

La bague 21 comporte quatre ergots ou épaulements 39 répartis sur la périphérie du corps cylindrique 34 et inscrits dans un cercle dont le diamètre est inférieur au diamètre interne de la virole 26. Ces ergots 39 possèdent des surfaces 40 et 41.

Des bossages 42 sont situés sous les ergots 39 afin de permettre le centrage de la bague 21 dans la pièce intermédiaire 22.

Les figures 3 et 4 montrent les dispositifs auxiliaires de positionnement précis et de blocage des composants. C'est ainsi que l'un des ergots 39 reçoit une cheville 43 dont l'extrémité supérieure est pourvue d'une gorge 44 permettant à un outil, non représenté, de saisir la cheville et d'assurer son déplacement vertical. Un logement 45 pratiqué dans l'ergot 39 emprisonne un ressort 46 disposé concentriquement à la cheville 43. Le fût de la cheville comporte une bride 47 sur laquelle l'extrémité du ressort 46 prend appui.

Sur la couronne 23, un alésage 48 d'un diamètre intérieur légèrement supérieur au diamètre extérieur de la cheville 43 est pratiqué.

De même, sur la couronne 23 est serti un pion 49 implanté dans une ouverture 30 et au voisinage immédiat d'un épaulement 27. La bague 21 comporte de plus à son extrémité supérieure une bride 50 définissant une gorge 51 permettant sa préhension par un outil de manutention. Dans cette bride 50 sont pratiquées des encoches 52 permettant à un outillage d'entraîner en rotation la bague 21.

Pour la mise en place ou l'extraction d'une bague de guidage conforme aux figures 3 et 4, l'on procède selon les étapes suivantes:

La première opération à réaliser concerne la mise en place de la pièce intermédiaire 22. Cette opération intervient lors d'un arrêt du réacteur, lorsque les équipements internes supérieurs sont extraits de la cuve 1 et placés sur des stands de dépose dans les piscines du bâtiment contenant le réacteur.

A l'aide d'un outillage, ne faisant pas partie de la présente invention, la pièce 22 est positionnée sur la plaque 20 par introduction de la virole 31 dans l'ouverture 32 et par contact de sa surface 24 avec la surface supérieure de la plaque 20. Un second outillage assure alors sa fixation par déformation mécanique de la paroi de la virole 31 sur la surface interne de l'ouverture 32 et sur les chanfreins 33.

La pièce intermédiaire 22 est alors prête pour recevoir la bague 21. Il est bien évident que la fixation de la pièce 22 n'est réalisée qu'une fois, c'est-à-dire lorsque le changement de l'ancienne conception est réalisé. Cette pièce 22 permet donc la mise en place ou l'extraction des bagues 21, de manière simplifiée, autant de fois qu'il est nécessaire pour les opérations nécessitant son démontage ou son remplacement.

Lors de sa mise en place, la bague 21 est saisie par un outillage, non représenté, par l'intermédiaire de la gorge 51. Le chanfrein 37 de fût 34 permet l'accouplement et le centrage bague-outil.

La pièce 21 est introduite dans l'ouverture définie par la virole 31, aidée en cela par le chanfrein 35, de telle manière que les ergots 39 soient situés au droit des ouvertures 30.

Les surfaces 41 des ergots 39 viennent au contact de la surface d'appui 25 de la couronne 23. Par l'intermédiaire des encoches 52 l'outillage entraîne en rotation la bague 21, selon un déplacement angulaire de 45° tel que le représente la flèche 53 sur la figure 4, jusqu'à ce qu'un ergot 39 vienne en butée sur le pion 49.

Cette rotation assure ainsi la mise en contact par frottement des surfaces 40 des ergots 39 avec les surfaces 29 des épaulements 27 assurant ainsi le blocage axial de ces pièces. De manière préférentielle les surfaces 40 sont pourvues d'une pente facilitant le glissement relatif des surfaces 40 et 29 et agissant à la manière d'un coin.

Dans le même temps la cheville 43 glisse sur la surface 25 jusqu'à ce qu'elle se situe au droit de l'alésage 48 de la couronne 23. La cheville 43 sous l'action du ressort 46 agissant entre la paroi supérieure du logement 45 et la bride 47 et ainsi introduite dans l'alésage 48 assurant le blocage en rotation de la bague 21 dans la pièce 22.

Lors des opérations de démontage et avant la mise en rotation de la bague 21 selon un déplacement angulaire inverse, un outillage saisit la cheville 43 par l'intermédiaire de sa gorge 44 de façon à extraire la cheville de l'alésage 48 par déplacement vertical.

La cheville 44 peut être équipée de moyens de blocage en position haute.

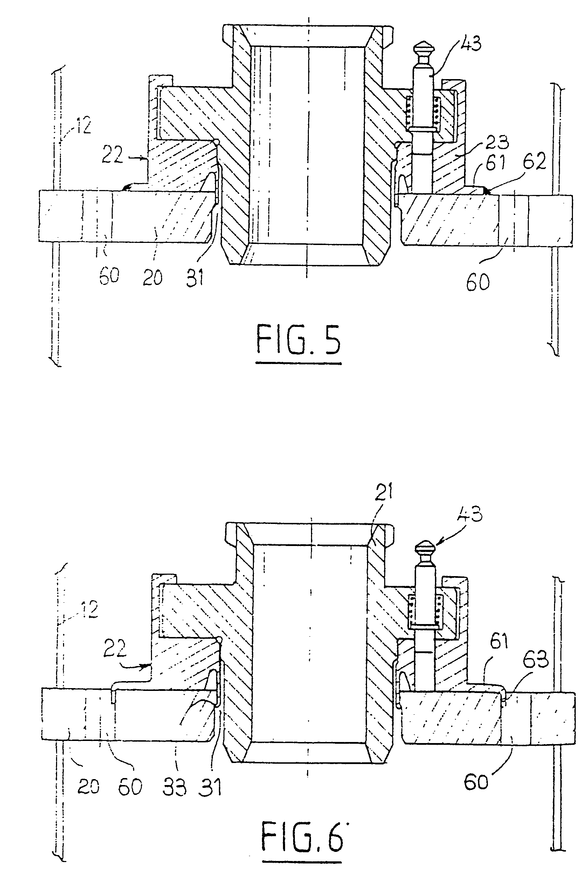

Les modes de réalisation représentés aux figures 5 à 7 et dans lesquelles les mêmes indices sont utilisés, concernent des variantes de fixation de la pièce intermédiaire 22 sur la plaque supérieure 20.

Sur ces figures, les parois du tube 12 ont été représentées ainsi que les alésages 60 prévus, dans l'art antérieur, comme emplacement des éléments flexibles. Il est évident que pour la mise en oeuvre de ces variantes, il est nécessaire de procéder, avant la fixation de la pièce intermédiaire 22 à la suppression de ces organes flexibles.

La figure 5 représente une pièce intermédiaire dans laquelle la couronne 23 se prolonge à la partie inférieure opposée à celle comportant la virole 31 d'une collerette circulaire 61. Cette collerette est liée à la plaque 20 par soudage. La soudure 62 peut être réalisée soit en cordon soit par points.

La figure 6 représente une collerette 61 s'étendant jusqu'à l'axe des alésages 60. Des déformations mécaniques 63 sont effectuées de manière à fixer l'extrémité de la collerette 61 contre la paroi des alésages 60. Un roulage léger de la virole 31 sur le chanfrein 33 peut, en complément, être effectué.

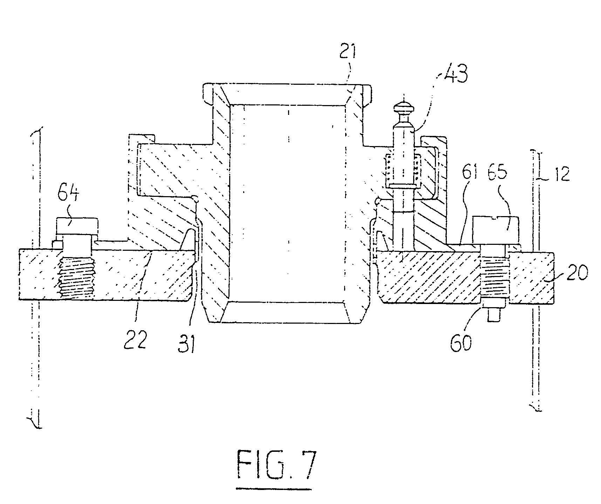

La figure 7 représente une variante dans laquelle la collerette 61 s'étend au-delà des alésages 60. Des trous, d'un diamètre légèrement supérieur au diamètre des alésages 60, et aux mêmes emplacements, sont pratiqués dans la collerette 61 afin de permettre le passage d'organes de fixation.

Comme on peut le voir sur la partie gauche de la figure, l'organe de fixation peut être une vis 64, alors que sur la partie droite l'organe de fixation est constitué par une douille (ou vérin) à expansion radiale 65 de type connu. Dans le cas de fixation par vis 64 une opération de taraudage de l'alésage 60 est effectuée après l'enlèvement des éléments flexibles.

Il faut noter que dans tous ces exemples de réalisation la virole 31 constitue l'élément de centrage de la pièce intermédiaire 22 permettant ainsi de respecter l'alignement nécessaire au guidage parfait des grappes de commande du réacteur.

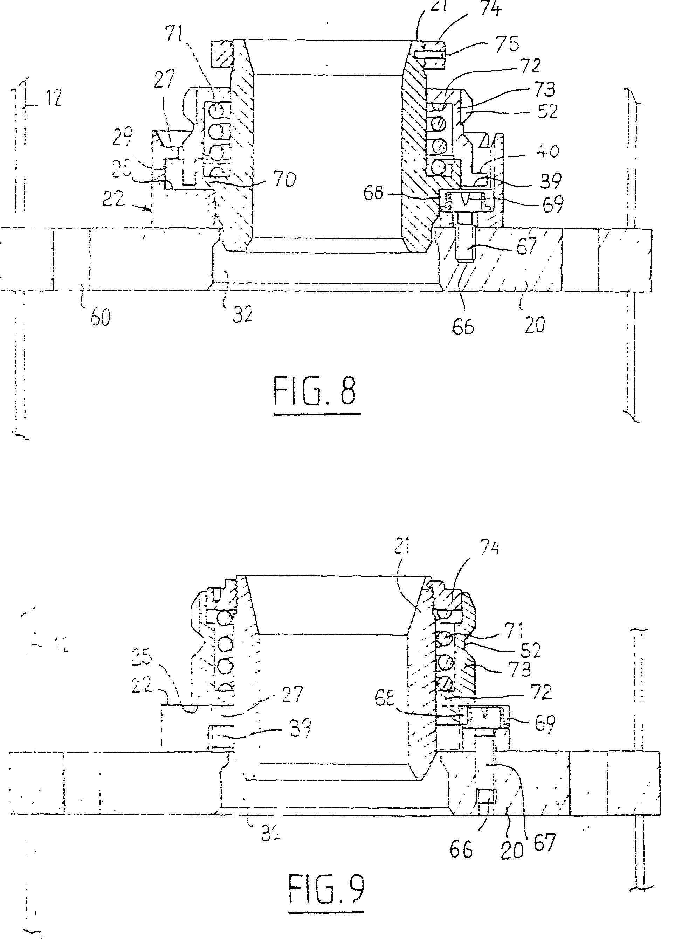

Les modes de réalisation représentés aux figures 8 et 9 et dans lesquels les indices principaux utilisés dans la description précédente sont repris, concernent des variantes du blocage axial de la bague 21 dans la pièce intermédiaire 22.

Comme on peut le voir, la pièce 22 est fixée à la plaque 20 par une liaison conforme à la réalisation de la figure 7, c'est-à-dire à l'aide d'un assemblage vissé.

On remarquera toutefois que dans ces deux réalisations les vis 67 sont engagées dans des trous taraudés 66 qu'ils soient débouchants ou non à la surface inférieure de la plaque 20. Dans ces deux cas il convient, à l'aide d'un gabarit, de réaliser, lors de l'opération de suppression des éléments flexibles, le perçage des trous 66. Ce perçage est suivi d'une opération de taraudage afin de permettre le blocage par les vis 67 de la pièce 22 sur la plaque 20. L'opération de perçage par l'intermédiaire d'un gabarit permet d'assurer le centrage parfait des pièces 22 et 21 par rapport à l'ouverture centrale 32 de la plaque 20.

Les vis 67 qui, comme on peut le voir, sont disposées dans des logements 68 pratiqués sur la surface d'appui 25 sont pourvues d'un système de sécurité 69 constitué d'une bague à virole déformable assurant l'antidévissage des vis 67. La profondeur des logements 68 est calculée de façon à ce que, lorsque la pièce 22 est fixée à la plaque 20, la partie supérieure de la tête de la vis 67 équipée de l'antidévissage 69 soit à un niveau légèrement inférieur au plan horizontal défini par la surface d'appui 25. De cette façon, la tête des vis 67 ne peut pas constituer un obstacle en déplacement des ergots 39 de la bague 21 lors de son positionnement et de son blocage, par déplacement angulaire, dans la pièce 22.

Il faut noter que dans les réalisations décrites précédemment, un déplacement angulaire de 45° de la bague 21 est nécessaire pour assurer le blocage ou le déblocage des ergots 39 dans les épaulements 27 du fait de l'utilisation de quatre ergots. Dans le cas des figures 8 et 9, trois ergots 39 disposés à 120° sur la périphérie de la bague 21 coopèrent avec trois épaulements 27 disposés eux-mêmes à 120° sur la pièce intermédiaire 22. Dans ce cas un déplacement angulaire, tel que matérialisé par la flèche 53 de la figure 4, de 60° sera imprimé à la bague 21. Du nombre d'ergots et d'épaulements dépendent donc les déplacements angulaires de la pièce 21, ces déplacements étant égaux à 360° divisé par deux fois le nombre d'ergots utilisés.

Ces variantes représentées aux figures 8 et 9 concernent des dispositifs auxiliaires de blocage axial de la bague amovible 21 dans la pièce intermédiaire 22.

Comme on peut le voir ces dispositifs auxiliaires peuvent accroître ou remplacer le blocage axial, par effet de coin, dû à la coopération des faces en opposition 40 et 29 des ergots 39 et épaulements 27.

C'est ainsi que la bague 21 de la figure 8 comporte à sa périphérie un épaulement 70 définissant un siège pour un ressort hélicoïdal 71. Une bague externe 72 prolongée par une paroi cylindrique verticale 73, munie d'encoches 52 de manutention et d'entraînement en rotation de la bague 21, forme avec l'épaulement 70 le logement du ressort 71. Une bague 74 est vissée à l'extrémité supérieure de la bague 21 afin de limiter le déplacement de la bague 72. La bague 74 reçoit, au montage, après mise en place du ressort 71 et de la bague 72, une clavette 75 soudée.

Lors de la mise en place de la bague 21, un outil de manutention, non représenté, amène l'épaulement 70 au contact de la surface d'appui 25. Un déplacement angulaire est alors effectué afin de faire coopérer les surfaces 29 et 40 des épaulements et des ergots. Lors du retrait de l'outil les efforts emmagasinés par le ressort 71 sont alors libérés assurant ainsi une force ascendante de contact importante entre les épaulements et les ergots.

Sur la figure 9, les ergots 39 sont portés directement par la bague 21 et après le déplacement angulaire le ressort 71 applique une force descendante de la bague externe 72 sur la pièce intermédiaire 22, entraînant le déplacement axial vertical de la bague 21, assurant ainsi un blocage axial des ergots sur les épaulements.

Le dispositif de verrouillage de bague amovible suivant l'invention est plus particulièrement applicable aux tubes de guidage des barres de commande et d'arrêt des réacteurs nucléaires à eau légère.

## Revendications

1. Dispositif de verrouillage et de centrage d'une bague de guidage (21) sur une plaque d'extrémité (20) d'un tube-guide d'une barre de commande d'un réacteur nucléaire, ladite plaque d'extrémité comportant une ouverture (32) au niveau de laquelle la bague de guidage (21) qui comporte une ouverture centrale et coaxiale (36) est montée de manière coaxiale à l'ouverture (32) le dispositif de verrouillage et de centrage étant constitué par une pièce intermédiaire (22) de forme tubulaire comportant des logements (28) de direction radiale disposés sur sa périphérie interne et séparés par des passages (30) ouverts vers une extrémité axiale de la pièce intermédiaire et par des parties d'accrochage (39) de la bague (21) complémentaires des logements (28) de la pièce intermédiaire (22) disposées sur sa périphérie externe, la pièce intermédiaire (22) étant fixée rigidement sur la plaque d'extrémité (20) de façon que son ouverture centrale soit coaxiale à l'ouverture (32) de la plaque (20).

2. Dispositif suivait la revendication 1, caractérisé par le fait que la pièce intermédiaire (22) comporte une couronne (23) d'appuis sur la plaque (20) autour de son ouverture (32) et une virole (31) engagée dans l'ouverture (32) de la plaque (20) sur une partie au moins de sa hauteur et comportant une partie déformée radialement assurant la fixation de la pièce intermédiaire (22) dans l'ouverture de la plaque (20).

3. Dispositif suivant la revendication 1, caractérisé par le fait que la pièce intermédiaire (22) comporte une collerette circulaire (61) à sa périphérie externe, en appui sur la plaque (20) et soudée sur cette plaque, assurant ainsi la fixation de la pièce intermédiaire (22) sur la plaque (20) et une virole (31) engagée dans l'ouverture (32) de la plaque (20) pour assurer le centrage de la pièce intermédiaire (22) par rapport à l'ouverture (32) de la plaque (20).

4. Dispositif suivant la revendication 1, dans le cas où la plaque (20) comporte une pluralité d'alésages (60) autour de son ouverture (32), caractérisé par le fait que la pièce intermédiaire (22) comporte une pluralité de pattes de fixation (61) à sa périphérie externe serties chacune dans un alésage (60) pour la fixation de la pièce intermédiaire (22) par rapport à la plaque (20).

5. Dispositif suivant la revendication 1, dans le cas où la plaque (20) comporte une pluralité d'alésages (60) autour de son ouverture (32), caractérisé par le fait que la pièce intermédiaire (22) comporte une collerette (61) à sa périphérie externe percée de trous en correspondance avec les alésages (60) de la plaque (20) dans lesquels des moyens de fixation (64, 65) sont introduits pour assurer le maintien de la pièce intermédiaire (22) sur la plaque (20).

6. Dispositif selon la revendication 5, caractérisé par le fait que les moyens de fixation (64) sont constitués par des vis.

7. Dispositif de verrouillage suivant la revendication 5, caractérisé par le fait que les moyens de fixation (65) sont constitués par des douilles à expansion radiale.

8. Dispositif de verrouillage suivant la revendication 1, caractérisé par le fait que la plaque (20) comporte autour de l'ouverture (32) un ensemble de trous taraudés (66) réalisés grâce à un gabarit et mis en concordance avec un ensemble de vis (67) engagées dans des logements (68) de la

EP 0 219 412 B1

11

pièce intermédiaire (22).

9. Dispositif suivant la revendication 8, caractérisé par le fait que les logements (68) des vis (67) dans la pièce intermédiaire (22) sont usinés de façon à permettre la libre manoeuvre de la bague (21) pour son blocage et à permettre d'y placer une virole déformable (69) assurant l'anti-dévissage de la vis (67).

10. Dispositif suivant l'une quelconque des revendications 1 à 9, caractérisé par le fait que les parties d'accrochage (39) de la bague de guidage (21) sont constituées par des ergots (39) susceptibles d'être introduits dans les logements (28) de la pièce intermédiaire par introduction axiale et rotation autour de l'axe de la bague (21).

11. Dispositif suivant la revendication 10, caractérisé par le fait que les ergots (39) sont usinés dans la partie périphérique de la bague de guidage (21).

12. Dispositif suivant la revendication 10, caractérisé par le fait qu'une bague externe (72) est montée autour de la bague de guidage (21), coulissante dans la direction axiale autour de cette bague de guidage (21) et qu'un ressort (71) est intercalé entre la bague externe (72) et la bague de guidage (21).

13. Dispositif suivant la revendication 12, caractérisé par le fait que les ergots (39) sont usinés sur la bague externe (72).

14. Dispositif selon l'une quelconque des revendications 1 à 13, caractérisé par le fait que la pièce intermédiaire (22) et la bague de guidage (21) comportent des moyens complémentaires (43, 48, 49) pour arrêter et fixer en position d'accrochage la bague de guidage (21) par rapport à la pièce intermédiaire (22).

15. Application du dispositif suivant l'une quelconque des revendications 1 à 14, caractérisée en ce que le tube-guide est un tube de guidage (12) de prolongateur (9) de barre de commande d'un réacteur nucléaire à eau légère, que la pièce intermédiaire est centrée et fixée sur ladite plaque terminale (20), à demeure, lors d'une opération de maintenance, et que ladite bague de guidage (21) assure le guidage du prolongateur (9) et les restrictions de débit de l'eau légère dans le tube de guidage (12), cette bague de guidage (21) pouvant être séparée de la pièce intermédiaire (22) par simple rotation, lors d'une opération ultérieure de maintenance.

**Patentansprüche**

1. Vorrichtung zum Verriegeln und Zentrieren eines Führungsringes (21) auf einer Endplatte (20) eines Führungsrohres eines Steuerstabes eines Kernreaktors, wobei die Endplatte eine Öffnung

12

(32) auf deren Höhe der Führungsring (21) der eine zentrale und koaxiale Öffnung (36) aufweist, auf koaxiale Weise zu der Öffnung (32) angeordnet ist, wobei die Vorrichtung zum Verriegeln und Zentrieren gebildet ist aus einem Zwischenteil (22) von Rohrform, das Aufnahmen (28) für die radiale Richtung aufweist, die am Innenumfang angeordnet und durch offene Kanäle (30) zu einem axialen Ende des Zwischenstücks getrennt sind, und aus Aufhängbereichen (39) des Ringes (21) gebildet sind, die komplementär zu den Aufnahmen (28) des Zwischenstücks (22) auf seinem Außenumfang angeordnet sind, wobei das Zwischenstück (22) steif auf der Endplatte (20) derart befestig ist, daß seine Mittenöffnung koaxial zur Öffnung (32) der Platte (20) verläuft.

2. Vorrichtung nach Anspruch 1 dadurch gekennzeichnet, daß das Zwischenstück (22) einen Anschlagkranz (23) auf die Platte (20) um dessen Öffnung (32) und einen Ring (31) aufweist, der in Eingriff ist mit der Öffnung (32) der Platte (20) wenigstens in einem Bereich seiner Höhe und einen radial verformten Bereich aufweist, der die Festlegung des Zwischenstücks (22) in der Öffnung der Platte (20) sicherstellt.

3. Vorrichtung nach Anspruch 1 dadurch gekennzeichnet, daß das Zwischenstück (22) einen kreisförmigen Kragen (61) an seinem Außenumfang aufweist, in Anschlag an die Platte (20) und auf diese Platte geschweißt ist, was so die Befestigung des Zwischenstücks (22) auf der Platte (20) sicherstellt, und wobei ein Reifen (31) in die Öffnung (32) der Platte (20) eingreift, um die Zentrierung des Zwischenstücks (22) bezüglich der Öffnung (32) der Platte (20) sicherzustellen.

4. Vorrichtung nach Anspruch 1 für den Fall, wo die Platte (20) eine Mehrzahl von Öffnungen (60) um ihre Öffnung (32) aufweist, dadurch gekennzeichnet, daß das Zwischenstück (22) eine Mehrzahl von Befestigungslaschen (61) an seinem Außenumfang aufweist, die je in eine Öffnung (60) für die Befestigung des Zwischenstücks (22) bezüglich der Platte (20) umgefalzt sind.

5. Vorrichtung nach Anspruch 1 für den Fall, wo die Platte (20) eine Mehrzahl von Öffnungen (60) um ihre Öffnung (32) aufweist, dadurch gekennzeichnet, daß das Zwischenstück (22) einen Kragen (61) an seinem Außenumfang aufweist, der von Löchern entsprechend zu den Öffnungen (60) der Platte (20) durchsetzt ist, in die Befestigungseinrichtungen (64, 65) eingeführt sind, um das Halten des Zwischenstücks (22) auf der Platte (20) sicherzustellen.

6. Vorrichtung nach Anspruch 5, dadurch gekennzeichnet, daß die Befestigungseinrichtungen (64) durch Schrauben gebildet sind.

7. Vorrichtung nach Anspruch 5, dadurch gekennzeichnet, daß die Befestigungseinrichtungen (65) durch Radialexpansionshülsen gebildet sind.

# EP 0 219 412 B1

8. Vorrichtung nach Anspruch 1 dadurch gekennzeichnet, daß die Platte (20) um die Öffnung (32) eine Anordnung von Gewindelöchern (66) aufweist, die dank einer Kopiervorlage erzeugt sind und in Übereinstimmung mit einer Schraubenanordnung (67) ist, die in Aufnahmen (68) des Zwischenstücks (22) eingreifen.

9. Vorrichtung nach Anspruch 8, dadurch gekennzeichnet, daß die Aufnahmen (68) der Schrauben (67) in dem Zwischenstück (22) derart hergestellt sind, daß sie das freie Manövrieren des Ringes (21) für seine Blockierung erlauben und erlauben, darauf eine verformbare Hülse (69) zu plazieren, die das Lösen der Schraube (67) verhindert.

10. Vorrichtung nach einem der Ansprüche 1 bis 9, dadurch gekennzeichnet, daß die Aufhängbereiche (39) des Führungsringes (21) durch Vorsprünge (39) gebildet sind, die geeignet sind, in die Aufnahmen (28) des Zwischenstücks durch axiale Einführung und Drehung um die Achse des Ringes (21) eingeführt zu werden.

11. Vorrichtung nach Anspruch 10, dadurch gekennzeichnet, daß die Vorsprünge (39) in dem Umfangsbereich des Fürhungsringes (21) ausgebildet sind.

12. Vorrichtung nach Anspruch 10, dadurch gekennzeichnet, daß ein Außenring (72) um den Führungsring herum in der Axialrichtung um diesen Führungsring (21) gleitbeweglich angeordnet ist, und daß eine Feder (71) zwischen dem Außenring (72) und dem Führungsring (21) angeordnet ist.

13. Vorrichtung nach Anspruch 12, dadurch gekennzeichnet, daß die Vorsprünge (39) auf dem Außenring (72) ausgebildet sind.

14. Vorrichtung nach einem der Ansprüche 1 bis 13, dadurch gekennzeichnet, daß das Zwischenstück (22) und der Führungsring (21) komplementäre Einrichtungen (43, 48, 49) aufweisen, um in Aufhängstellung den Führungsring (21) bezüglich des Zwischenstücks (22) zu arretieren und festzulegen.

15. Verwendung der Vorrichtung nach einem der Ansprüche 1 bis 14, dadurch gekennzeichnet, daß das Führungsrohr ein Führungsrohr (12) eines Verlängerungstücks (9) des Steuerstabes eines Leichtwasserkernreaktors ist, daß das Zwischenstück zentriert und für immer fixiert wird auf der genannten Endplatte (20), bei einem Wartungsvorgang, und daß der genannte Führungsring (21) die Führung der Verlängerung (9) und die Begrenzungen der Rate des Leichtwassers in dem Führungsrohr (12) sicherstellt, wobei der Führungsring (21) von dem Zwischenstück (22) durch einfache Drehung getrennt werden kann, bei einem späteren Wartungsvorang.

## Claims

1. A device for locking and centering a guide ring (21) on an end plate (20) of a guide tube for a control rod of a nuclear reactor, said end plate having an orifice (32), the guide ring (21), which comprises a central coaxial orifice (36), being mounted level with said orifice (32), and coaxially with respect to said orifice (32), the locking and centoring device consisting of a tubular intermediate piece (22) comprising radially directed recesses (28) arranged on its inner periphery and separated by passages (30) open towards an axial end of the intermodiate piece, and by attachment portions (39) of the ring (21) which are provided on the outer periphery thereof and which match the recesses (28) in the intermediate piece (22), the intermediate piece (22) being rigidly fixed to the end place (20) so that its central orifice is coaxial with the opening (32) in the plate (20).

2. Device according to claim 1, characterised in that the intermediate piece (22) has a crown (23) bearing on the plate (20) round its orifice (32) and a collar (31) engaging in the orifice (32) in the plate (20) over at least part of its height and having a radially deformed part which ensures that the intermediate piece (22) is fixed in the orifice in the plate (20).

3. Device according to claim 1, characterised in that the intermediate piece (22) has a circular flange (61) on its outer periphery, boaring on the plate (20) and welded to this plate, thus ensuring that the intermediate piece (22) is fixed to the plate (20) and a collar (31) engaging in the orifice (32) of the plate (20) to ensure that the intermediate piece (22) is centered in relation to the orifice (32) in the plate (20).

4. Device according to claim 1, where the plate (20) has a plurality of bores (60) around its orifice (32), characterized in that the intermediate piece (22) has a plurality of fixing lugs (61) on its outer periphery, each crimped in a bore (60) for securing the intermediate piece (22) relative to the plate (20).

5. Device according to claim 1, where the plate (20) has a plurality of bores (60) round its orifice (32) characterised in that the intermediate piece (22) has a flange (61) on its outer periphery formed with holes which match the bores (60) of the plate (20) and in which fixing means (64, 65) are inserted to ensure that the intermediate piece 22 is retained on the plate (20).

6. Device according to claim 5, characterized in that the fixing means (64) consist of screws.

7. Device according to claim characterised in that the fixing means (65) consist of radially expanding bushes.

8. Device according to claim 1, characterised in

8

that the plate (20) has, round the orifice (32), a set of tapped holes (66) made using a template and coinciding with a set of screws (67) engaged in recesses (68) in the intermediate piece (22).

9. Device according to claim 8, characterised in that the recesses (68) for the screws (67) in the intermediate piece (22) are machined so as to allow free manoeuvering of the ring (21) to lock it and to allow a deformable collar (69) to be placed there which will prevent the screws (67) from being unscrewed.

10. Device according to any of claims 1 to 9, characterised in that the attachment portions (39) of the guide ring (21) consist of lugs (39) adapted to be inserted in the recesses (28) in the intermediate piece by axial insertion and rotation about the axis of the ring (21).

11. Device according to claim 10 characterised in that the lugs (39) are machined in the peripheral part of the guide ring (21).

12. Device according to claim 10 characterised in that an outer ring (72) is mounted around the guide ring (21) so as to be slidable around said guide ring (21) in the axial direction and a spring (71) is inserted between the outer ring (72) and the guide ring (21).

13. Device according to claim 12, characterised in that the lugs (39) are machined on the outer ring (72).

14. Device according to any one of claims 1 to 13, characterised in that the intermediate piece (22) and the guide ring (21) have additional means (43, 48, 49) for stopping the guide ring (21) and fixing it in the position of attachment relative to the intermodiate piece (22).

15. Use of the device according to any one of claims 1 to 14, characterised in that the guide tube is a guide tube (12) for an extension piece (9) of a control rod of a light water nuclear reactor, the intermediate piece is centered and fixed on the end plate (20), permanently, during a maintainence operation, and said guide ring (21) ensures the guiding of the extension piece (9) and the limitation of the flow of light water in the guide tube (12), this guide ring (21) also being capable of being separated from the intermediate piece (22) simply by being rotated during a subsequent maintainence operation.

FIG.1

FIG.2

FIG.3

FIG.4

FIG. 5

FIG. 6

FIG. 7

FIG. 8

FIG.9